# FASCICULE DE BREVET EUROPEEN

(11) **EP 3 707 297 B1**
(45) Date de publication et mention de la délivrance du brevet: **21.06.2023**
(21) Numéro de dépôt: 18816200.2
(22) Date de dépôt: 20.11.2018
(51) Int. Cl.: C25D 13/02, B22F 3/105, B22F 5/04, C25D 13/12, F01D 5/28, C25D 13/14, B33Y 80/00, B22F 10/28, B22F 10/62, B22F 10/64, B33Y 10/00, B22F 10/66, B22F 3/24

(54) **PROCEDE DE FABRICATION D'UNE BARRIERE THERMIQUE SUR UNE PIECE D'UNE TURBOMACHINE**
VERFAHREN ZUR HERSTELLUNG EINER WÄRMEBARRIERE AN EINEM TEIL EINER TURBOMASCHINE
METHOD FOR PRODUCING A THERMAL BARRIER ON A PART OF A TURBOMACHINE

(43) Date de publication de la demande: 16.09.2020
(73) Titulaire: Safran Helicopter Engines, 64510 Bordes (FR)
(72) Inventeur: GURT SANTANACH, Julien, 77550 Moissy-Cramayel (FR); DANIS, Yann, 77550 Moissy-Cramayel (FR); CRABOS, Fabrice, 77550 Moissy-Cramayel (FR)
(74) Mandataire: Cabinet Beau de Loménie
(86) Numéro de dépôt international: PCT/FR2018/052929
(87) Numéro de publication internationale: WO 2019/102137

(56) Documents cités:
- EP-A1- 2 000 557
- EP-B1- 2 000 557
- WO-A1-2015/114227
- FR-A1- 2 939 430
- US-A- 5 234 636
- US-A1- 2012 003 086
- US-A1- 2014 079 540
- US-A1- 2016 002 790
- US-A1- 2016 052 057
- US-B1- 6 294 261
- Giang Do ET AL: "Electrophoretic Deposition of Boehmite on Additively Manufactured, Interpenetrating Periodic Open Cellular Structures for Catalytic Applications", Industrial & Engineering Chemistry Research, vol. 56, no. 45, 15 November 2017 (2017-11-15), pages 13402-13410, XP055561694, ISSN: 0888-5885, DOI: 10.1021/acs.iecr.7b02453

## Description

### Arrière-plan de l'invention

La présente invention se rapporte au domaine général des turbomachines, et notamment des turbomachines pour aéronef.

Une turbomachine comprend des pièces qui nécessitent d'être refroidies durant le fonctionnement de la turbomachine, typiquement car lesdites pièces sont situées dans une zone de la turbomachine dont la température est supérieure à la température limite d'utilisation desdites pièces.

Les distributeurs, ou aubages fixes, sont typiquement des pièces de la turbomachine qui doivent être refroidis durant le fonctionnement de la turbomachine, et particulièrement les distributeurs de turbine qui sont situés en aval de la chambre de combustion.

Dans le cas d'une turbomachine à double flux, afin de refroidir les pièces souhaitées, une partie du flux secondaire, c'est-à-dire le flux d'air contournant la chambre de combustion, est prélevée afin d'être dirigée vers lesdites pièces de manière à les refroidir.

Afin de limiter la quantité d'air prélevée du flux secondaire, et ainsi améliorer le rendement de la turbomachine, la forme des pièces est modifiée afin d'améliorer le refroidissement desdites pièces.

Or, les formes les plus performantes sont des formes complexes qui ne peuvent pas être obtenues avec les procédés de fabrication classiques tels que la fonderie.

Afin de fabriquer des pièces avec des formes complexes, il est actuellement utilisé des techniques de fabrication additive, également appelées « impression tridimensionnelle » ou « impression 3D », comme par exemple des procédés de fusion laser sur lit de poudre ou de fusion par faisceau d'électrons sur lit de poudre.

La fabrication additive permet par exemple de fabriquer des distributeurs d'air de turbine qui comprennent un disque intérieur, des aubages et un disque extérieur en une seule pièce.

Cependant, de telles techniques de fabrication additive rencontrent un problème d'état de surface, la surface des pièces possède une rugosité trop importante (typiquement un Rₘₐₓ allant jusqu'à 100µm).

Une rugosité trop élevée n'est notamment pas compatible avec les contraintes aérodynamiques que doivent respecter les pièces situées dans une veine d'air de la turbomachine, comme par exemple les distributeurs.

Ainsi, il existe un besoin pour la fabrication d'une pièce d'une turbomachine possédant à la fois une forme complexe, afin de notamment optimiser son refroidissement, et à la fois un état de surface suffisamment lisse, afin de respecter notamment les contraintes aérodynamiques.

Par ailleurs, afin d'augmenter la température limite d'utilisation des pièces de la turbomachine, par exemples des distributeurs d'air, il est connu d'appliquer sur les parties désirées des pièces un revêtement en un matériau réfractaire, typiquement du type zircone yttriée, afin de former une barrière thermique.

Actuellement, il est connu de déposer un revêtement en matériau réfractaire afin de former une barrière thermique par projection thermique, ou par dépôt en phase vapeur avec évaporation sous faisceau d'électron (« électron beam physical vapor déposition » ; EB-PVD).

Cependant, de telles techniques pour le dépôt du revêtement en matériau réfractaire peuvent rencontrer un problème d'état de surface en formant un revêtement possédant une rugosité trop importante.

Un tel problème d'état de surface apparaît notamment lorsque la pièce sur laquelle ledit revêtement est déposé possède une rugosité importante.

Ainsi, il existe un besoin pour la fabrication d'une pièce possédant un revêtement en matériau réfractaire formant une barrière thermique possédant un état de surface suffisamment lisse.

Le document US 2012/003086 décrit le dépôt d'une couche d'oxyde par des techniques connues telles que la projection plasma (« plasma spray »), la projection de gaz à froid (« cold-gas spray »), le dépôt en phase vapeur avec évaporation sous faisceau d'électron ou le dépôt chimique en phase vapeur (« chemical vapor déposition »). Le document WO 2015/114227 décrit l'utilisation d'un traitement par électrophorèse pour la réparation localisée d'une barrière thermique endommagée.

### Objet et résumé de l'invention

La présente invention a donc pour but principal de pallier de tels inconvénients en proposant un procédé de fabrication d'une pièce d'une turbomachine revêtue d'une barrière thermique comprenant les étapes suivantes :
- fabrication de la pièce par fabrication additive, ladite pièce comprenant une partie qui comprend une surface extérieure avec une première rugosité Rmax;
- dépôt par électrophorèse sur ladite surface extérieure d'une couche comprenant des particules d'un matériau céramique;
- consolidation de la couche par traitement thermique afin d'obtenir un revêtement céramique, ledit revêtement céramique comprenant une surface extérieure avec une deuxième rugosité Rmax qui est inférieure à la première rugosité Rmax.

Un tel procédé permet d'obtenir une pièce de forme complexe grâce à l'utilisation de la fabrication additive, qui est revêtue d'un revêtement en matériau céramique formant une barrière thermique, ce revêtement céramique permettant de lisser la surface de la pièce grâce à l'utilisation d'un dépôt par électrophorèse d'une couche comprenant des particules du matériau céramique.

En effet, la demanderesse s'est aperçu que le dépôt d'un revêtement céramique par électrophorèse permet de lisser les défauts de surfaces présents sur la pièce, ces défauts étant dus à l'utilisation de la fabrication additive.

Une telle solution est également très avantageuse pour des pièces en superalliages à base de nickel, car les supers alliages sont difficiles à usiner, complexifiant la reprise de l'état de surface par usinage.

Le procédé peut également comprendre les caractéristiques suivantes qui peuvent être prises seules ou en combinaison les unes avec les autres suivants les possibilités techniques :
- la couche comprend un monomère précurseur sol-gel du matériau céramique, le procédé comprenant en outre une étape de polymérisation du monomère pour former ledit matériau céramique.
- le procédé comprend en outre une étape de dépôt d'une sous-couche sur la pièce, la couche étant déposée sur ladite sous-couche.
- la sous-couche comprend du MCrAlYRE, avec RE désignant Hf, et/ou Si, et/ou Ta, et/ou Re, et/ou Pt, et/ou Pd, et avec M désignant Ni et/ou Co, ou bien dans lequel la sous-couche comprend de l'aluminure modifié par du Pt, et/ou du Hf, et/ou du Si.
- le traitement thermique de la pièce pour consolider un revêtement céramique est réalisé en chauffant la pièce à une température supérieure à 700°C, et de préférence comprise entre 900°C et 1100°C ;
- le matériau céramique comprend du Y₂O₃, de l'Al₂O₃, du TiO₂ du CeO₂, et/ou de la zircone stabilisée ou partiellement stabilisée du type ZrO₂-REO_{1.5} et/ou RE₂Zr₂O₇ (où RE désigne un ou plusieurs éléments Terre Rare, par exemple : Y, Ce, Gd, Sm, Yb, Dy ou Er), et/ou de la zircone yttriée ;
- le revêtement céramique a une épaisseur comprise entre 10 µm et 300 µm, et de préférence comprise entre 50 µm et 150 µm ;
- la pièce est un distributeur d'air de turbine comprenant une pluralité d'aubages, le revêtement céramique étant déposé sur les aubages.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un distributeur d'air selon un mode de réalisation de l'invention ;
- la figure 2A et la figure 2B représentent des vues en coupe de pièces revêtue d'une barrière thermique selon l'invention ;
- la figure 3 représente schématique la couche déposée par électrophorèse sur la pièce ;
- la figure 4 représente de manière schématique le dépôt d'un revêtement céramique par électrophorèse sur une pièce de turbomachine ;
- la figure 5 représente schématiquement les différentes étapes d'un procédé de fabrication selon une mise en oeuvre possible de l'invention ;
- la figure 6 représente schématiquement les différentes étapes du procédé de fabrication selon une variante possible du procédé de l'invention ;
- la figure 7 représente schématiquement les différentes étapes du procédé de fabrication selon une variante possible du procédé de l'invention
- la figure 8 est un graphique représentant la diminution de la rugosité à différents points d'une pièce fabriquée par fabrication additive grâce au dépôt par électrophorèse d'une barrière thermique.

### Description détaillée de l'invention

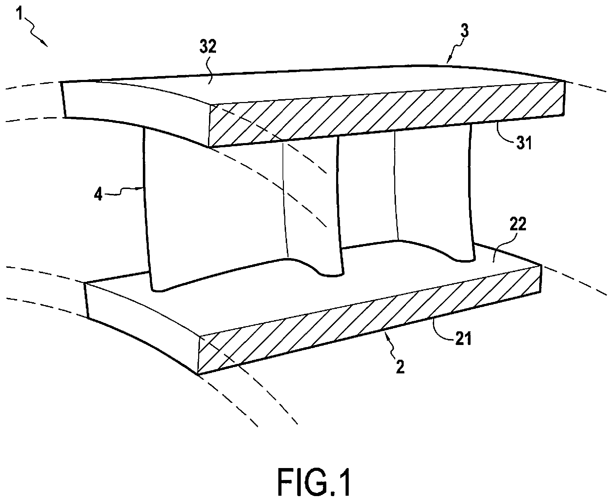

Sur la figure 1 est illustré un distributeur d'air 1 d'une turbine d'une turbomachine. Cependant, même si elle s'applique particulièrement bien pour les distributeurs d'air, l'invention n'est pas limitée aux distributeurs d'air mais peut être appliquée à d'autres pièces de la turbomachine nécessitant une barrière thermique.

A des fins de simplification, seule une portion du distributeur d'air 1 est illustrée sur la figure 1.

Le distributeur d'air 1 comprend un anneau intérieur 2, un anneau extérieur 3, et des aubages 4 qui relient l'anneau intérieur 2 à l'anneau extérieur 3.

L'anneau intérieur 2 comprend une face intérieure 21 qui est dirigée vers l'intérieur de la turbomachine et une face extérieure 22 qui est dirigée vers l'extérieure de ladite turbomachine, et donc vers l'anneau extérieur 3.

L'anneau extérieur 3 comprend une face intérieure 31 qui est dirigée vers l'intérieur de la turbomachine, donc vers l'anneau intérieur 2, et une face extérieure 32 qui est dirigée vers l'extérieur de ladite turbomachine.

La face extérieure 22 de l'anneau intérieur 2 et la face intérieure 31 de l'anneau extérieur 3 délimitent une veine d'air de la turbomachine.

Les aubages 4 sont destinés à être dans la veine d'air de la turbomachine et relient donc la face extérieure 22 de l'anneau intérieur 2 et la surface intérieure 31 de l'anneau extérieur 3.

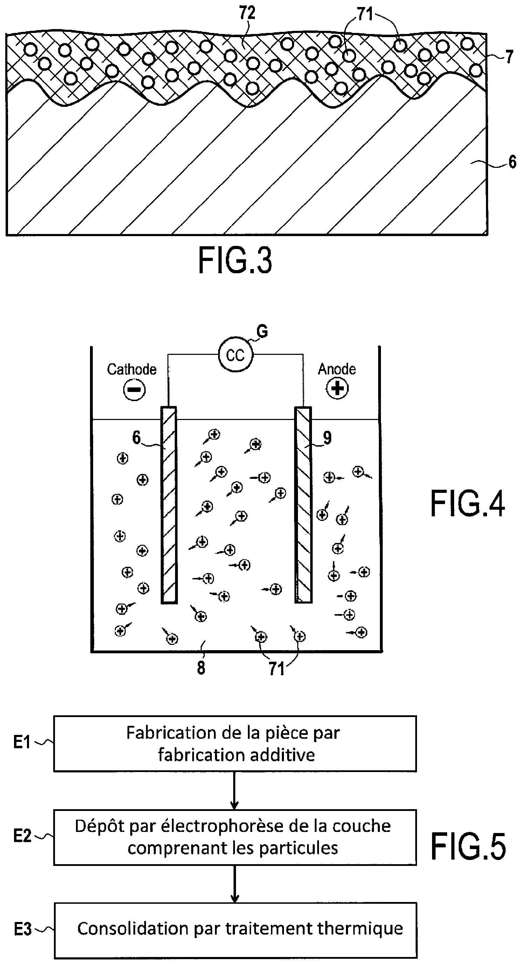

Comme cela est illustré à la figure 5, le procédé de fabrication comprend une étape E1 dans laquelle le distributeur d'air 1 est obtenu par fabrication additive. L'anneau intérieur 2, l'anneau extérieur 3 et les aubages 4 sont d'une seule pièce.

De plus, le distributeur d'air 1 étant obtenu par fabrication additive, ledit distributeur d'air 1 comprend une rugosité élevée sur sa surface extérieure, typiquement un Rₘₐₓ supérieur à 50µm. Par Rₘₐₓ on comprend ici la hauteur maximale de profil telle que défini dans la norme EN ISO 4288.

Le distributeur d'air 1 peut par exemple être réalisé fusion laser sur lit de poudre ou par fusion par faisceau d'électron sur lit de poudre.

Le distributeur d'air 1 comprend un revêtement céramique 5 déposé sur la face extérieure 22 de l'anneau intérieur 2, les aubages 4, et la face intérieure 31 de l'anneau extérieur 3. Ainsi, la partie du distributeur d'air 1 délimitant la veine d'air de la turbomachine est recouverte par le revêtement céramique 5, et est protégé contre les températures très élevées provoquées par la circulation d'air chaud dans ladite veine. Cependant, le revêtement céramique 5 peut n'être déposé que sur certains éléments délimitant la veine d'air, notamment le revêtement céramique peut être déposé uniquement sur les aubages 4.

Le distributeur d'air 1 comprend donc une partie interne 6 métallique, typiquement en alliage à base de nickel ou de cobalt, qui est recouverte par le revêtement céramique 5 qui forme une barrière thermique.

Le matériau céramique constitutif du revêtement céramique 5 peut être de la zircone yttriée (YSZ ; « Yttria-Stabilized Zirconia »), de l'oxyde de zirconium. Le matériau céramique peut également être de la zircone stabilisée ou partiellement stabilisée du type ZrO₂-ReO_{1.5} et/ou RE₂Zr₂O₇ (où Re désigne un ou plusieurs éléments Terre Rare, par exemple : Y, Ce, Gd, Sm Yb, Dy ou Er). Le matériau céramique peut également être du Y₂O₃, de l'Al₂O₃, du TiO₂ ou du CeO₂. Le matériau céramique peut également être un mélange de ces composants. Cependant, d'autres matériaux peuvent être utilisés, suivant les caractéristiques de tenue en température et dans le temps qui veulent être données au revêtement céramique 5.

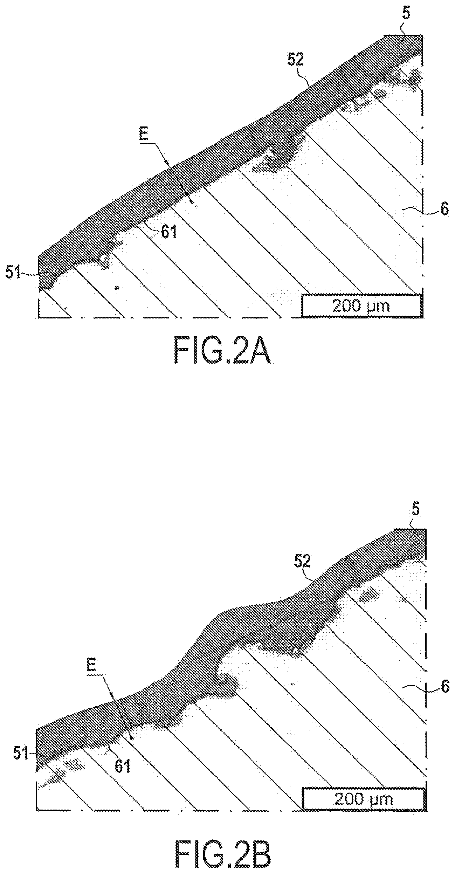

De plus, le revêtement céramique 5, en plus d'avoir un effet protecteur thermique pour le distributeur d'air 1, possède un effet lisseur permettant de réduire la rugosité du distributeur d'air 1, comme cela est illustré sur les figures 2A et 2B.

De plus, la rugosité importante de la partie interne 6, la partie interne 6 étant obtenue par fabrication additive, permet d'améliorer l'adhérence du revêtement céramique 5 sur ladite partie interne 6.

La partie interne 6 du distributeur d'air 1 comprend une surface extérieure 61, et le revêtement céramique 5 comprend d'une part une surface intérieure 51 en contact avec la surface extérieure 61 de la partie interne 6 du distributeur d'air 1 et une surface extérieure 52 opposée à la surface intérieure 51.

L'épaisseur E du revêtement céramique 5 peut varier selon les besoins, mais afin de résister à des températures supérieure à 1000°C est de préférence comprise entre 10µm et 300µm, et encore plus préférentiellement entre 50µm et 150µm. Par ailleurs, une épaisseur du revêtement céramique supérieure à 50µm permet d'assurer un bon effet de lissage du distributeur d'air 1.

Comme visible aux figures 2A et 2B, la surface extérieure 61 de la partie interne 6 possède une première rugosité tandis que la surface extérieure 52 du revêtement céramique 5 (qui correspond à la surface extérieure du distributeur d'air 1) possède une deuxième rugosité qui est inférieure à la première rugosité. Typiquement, la surface extérieure 61 de la partie interne 6 possède un Rₘₐₓ supérieur ou égal à 50µm (première rugosité), et la surface extérieure 52 du revêtement céramique 5 possède un Rₘₐₓ inférieur ou égal à 20µm (deuxième rugosité). De préférence, la surface extérieure 52 du revêtement céramique 5 possède un Rₘₐₓ inférieur ou égal à 10µm.

Le revêtement céramique possède une rugosité différente à ses deux surfaces. La surface intérieure 51 du revêtement céramique 5 possède une rugosité égale à celle de la surface extérieure 61 de la partie interne 6, et ainsi la rugosité de la surface intérieure 51 du revêtement céramique est plus importante que la rugosité de la surface extérieure 52 dudit revêtement céramique 5.

Une telle différence de rugosité entre la partie interne 6 métallique et le revêtement céramique 5 est obtenue grâce à un dépôt par électrophorèse du revêtement céramique 5 sur la partie interne 6. La demanderesse s'en effet aperçu que le dépôt par électrophorèse du revêtement céramique 5 permet de lisser la pièce sur laquelle ledit revêtement céramique 5 est déposé. En effet, la demanderesse s'est aperçu que les particules 71 tendent à s'accumuler dans les creux de la surface extérieure 61 de la partie interne 6.

Le dépôt par électrophorèse est effectué par dépôt d'une couche 7 comprenant des particules 71 du matériau céramique lors d'une étape E2 du procédé de fabrication, comme cela est illustré sur les figures 3 et 5.

Par ailleurs, selon un mode de réalisation possible, la couche 7 déposée par électrophorèse comprend également un monomère 72 précurseur sol-gel dudit matériau céramique, comme illustré sur la figure 3. Le monomère 72 peut par exemple être un protoxyde de zirconium (Zr(OC₃H₇).

Ce mode de réalisation permet d'obtenir un meilleur effet lissant par la création du revêtement céramique 5.

La couche 7 ainsi déposée étant liquide, car les particules 71 du matériau céramiques sont dispersées dans le monomère 72 précurseur sol-gel dudit matériau céramique qui est liquide, la couche 7 tend à posséder une face extérieure 7a lisse afin de réduire sa tension de surface.

Cette couche 7 est déposée par électrophorèse tel que cela est illustré à la figure 4. La partie interne 6 est placée dans un électrolyte 8 formé d'un liquide comprenant un liquide de support, ledit liquide de support pouvant par exemple être de type aqueux ou alcoolique, et les particules 71 du matériau céramiques qui sont dispersées dans ce liquide de support. La partie interne 6 est réalisée en matériau conducteur électriquement.

L'électrolyte 8 peut également comprendre le monomère 72 s'il est souhaité que la couche 7 comprenne le monomère 72

Pour réaliser le dépôt de la couche 7, un générateur G impose une différence de tension entre la partie interne 6 et une contre-électrode 9. Le générateur G est à courant continu ou à courant pulsé. La partie interne 6 est polarisée à une charge opposée à celle des particules 71. Du fait de l'application d'un champ électrique entre la partie interne 6 et la contre-électrode 9, les particules 71 se déplacent et se déposent sur la partie interne 6 pour former la couche 7.

Dans le cas où le monomère 72 est présent dans l'électrolyte 8, le monomère 72 est ainsi déposé avec les particules 71 pour former la couche 7 avec lesdites particules 71.

Le générateur applique une tension qui est supérieure à 1V, et de préférence supérieure à 40V. Le temps de traitement pour le dépôt de la couche 7 est supérieur à 1 minute, et de préférence supérieur à 5 minutes pour l'homogénéité de la couche 7. Le temps de traitement et la tension appliquée par le générateur sont adaptés suivant l'épaisseur E souhaitée pour le revêtement céramique 5 (et donc la couche 7).

Comme cela est illustré sur la figure 5, après l'étape E2 de dépôt par électrophorèse de la couche 7 comprenant les particules 71 du matériau céramique, une étape E3 de consolidation de la couche 7 par traitement thermique est réalisée, de manière à ainsi obtenir le revêtement céramique 5. Le traitement thermique de consolidation peut par exemple être réalisé à l'air libre ou sous atmosphère contrôlée à une température supérieure à 700°C, et de préférence à une température comprise entre 900°C et à 1100°C.

Le procédé peut également comprendre une étape de séchage avant l'étape E3 de consolidation de la couche 7 afin d'éliminer le liquide de support présent dans la couche 7. Cette étape de séchage peut être réalisée avec le traitement thermique de consolidation de la couche 7.

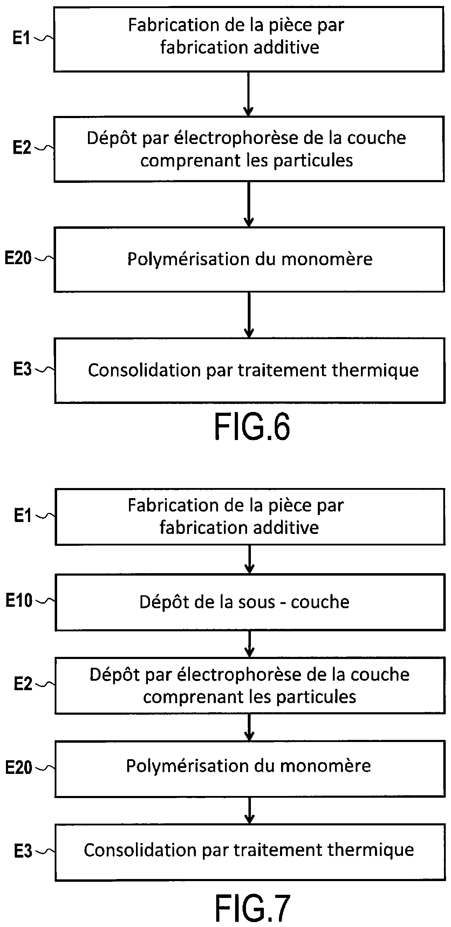

Par ailleurs, comme cela est illustré sur la figure 6, lorsque la couche comprend le monomère 72, le procédé comprend une étape E20 de polymérisation du monomère 72. Cette étape de polymérisation E20 permet de faire passer le monomère 72 de l'état liquide (sol) à l'état solide (gel). Cette étape permet également, en fonction du liquide support utilisé, d'éliminer ledit liquide support de la couche 7. Cette étape E20 de polymérisation peut par exemple être réalisée par un traitement thermique à une température de 200°C. A la suite de cette étape E20 de polymérisation, la couche 7 ne comprend que le matériau composite et forme le revêtement composite 5.

Selon une variante possible, illustrée sur la figure 7, une sous-couche est déposée sur la partie interne 6 avant le dépôt de la couche 7 lors d'une étape E10.

Cette sous-couche peut par exemple être déposée par électrophorèse, par co-déposition électrolytique, par peinture, par dépôt en phase vapeur, par projection thermique ou par sol-gel.

Ainsi, à la fin de la fabrication, le distributeur d'air 1 comprend sa partie interne 6 qui est recouverte par la sous-couche, ladite sous-couche étant elle-même recouverte par le revêtement céramique 5.

Le dépôt d'une sous-couche permet d'améliorer l'adhérence entre le revêtement céramique 5 et la partie interne 6 du distributeur d'air 1.

En outre, cette sous-couche permet d'améliorer la protection de la partie interne 6 du distributeur d'air 1 contre la corrosion et/ou l'oxydation à hautes températures. De plus, lorsque la sous-couche est déposée par électrophorèse, la sous-couche permet également de réduire la rugosité de la surface sur laquelle le revêtement en céramique 5 est déposé, ce qui réduit encore plus la rugosité de la surface extérieure 52 du revêtement en céramique 5.

De manière préférentielle, la sous couche comprend du MCrAlYRE, avec RE désignant Hf (hafnium), et/ou Si (silicium), et/ou Ta (tantale), et/ou Re (rhénium), et/ou Pt (platine), et/ou Pd (palladium), et avec M désignant Ni (nickel) et/ou Co (cobalt), ou bien la sous-couche comprend de l'aluminure modifié par du Pt, et/ou du Hf, et/ou du Si.

Un traitement thermique peut être réalisé par la suite afin de consolider ou diffuser cette sous-couche.

Par ailleurs, la polymérisation du monomère 72 et le traitement thermique de consolidation du revêtement céramique 5 peuvent être réalisés au sein d'une même étape de traitement thermique. Ainsi, au début du traitement thermique le monomère 72 est polymérisé, puis le revêtement céramique 5 est consolidé en continuant le traitement thermique.

L'invention permet ainsi de former une pièce pour une turbomachine qui est revêtue d'une barrière thermique dont l'état de surface est acceptable pour respecter les critères aérodynamiques, particulièrement pour une pièce située dans la veine d'air de la turbomachine, et ce malgré le fait qu'initialement la pièce présente un état de surface dégradé avec une rugosité trop importante.

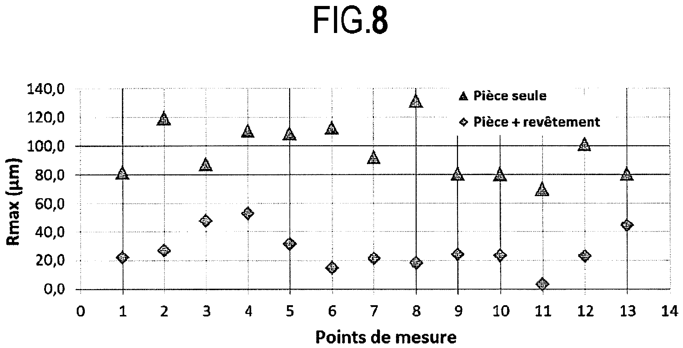

Comme illustrée sur la figure 8, le dépôt du revêtement céramique 5 permet de réduire la rugosité d'une pièce fabriquée par fabrication additive.

Afin d'obtenir le graphique de la figure 8, une pièce a été fabriquée par fabrication additive, et la rugosité de ladite pièce fabriquée par fabrication additive a été mesurée à différents points répartis sur ladite pièce. Comme visible sur la figure 8, le Rmax de la pièce aux différents points de mesure est supérieure à 60µm, et peut même être supérieur à 100µm sur plusieurs points de mesure.

Dans l'exemple de la figure 8, la pièce est un secteur angulaire de distributeur tel qu'illustré sur la figure 1. Le secteur angulaire de distributeur a été fabriqué en super alliage à base de nickel par fusion sélective par laser (ou procédé SLM pour « *sélective laser melting* » selon la terminologie anglo-saxonne).

En outre, afin d'obtenir l'autre moitié des points du graphique de la figure 8, une barrière thermique en revêtement céramique a été déposée sur la pièce fabriquée par fabrication additive, et la rugosité du revêtement céramique a été mesurée aux mêmes points de mesure que pour la pièce sans revêtement céramique. Comme visible sur la figure 8, le Rmax est fortement diminué par le dépôt du revêtement céramique.

Dans l'exemple de la figure 8, le revêtement céramique est en zircone yttriée. Le revêtement céramique pour l'exemple de la figure 8 est réalisé par dépôt par électrophorèse d'une suspension de zircone yttriée. La couche déposée par électrophorèse, en plus de comprendre des particules de zircone yttriée, comprend un précurseur sol-gel d'un matériau céramique. Le précurseur sol-gel est liquide au moment du dépôt, puis est solidifié par polymérisation.

L'invention permet de se passer des étapes de traitement de surface de la pièce, comme par exemple l'usinage, qui peuvent être réalisées pour lisser la surface de la pièce.

L'expression « compris(e) entre ... et ... » doit se comprendre comme incluant les bornes.

## Revendications

1. Procédé de fabrication d'une pièce d'une turbomachine revêtue d'une barrière thermique, **caractérisé en ce qu'**il comprend les étapes suivantes :
- (E1) fabrication de la pièce par fabrication additive, ladite pièce comprenant une partie (6) qui comprend une surface extérieure (61) avec une première rugosité Rₘₐₓ ;
- (E2) dépôt par électrophorèse sur ladite surface extérieure (61) d'une couche (7) comprenant des particules (71) d'un matériau céramique ;
- (E3) consolidation de la couche (7) par traitement thermique afin d'obtenir un revêtement céramique (5), ledit revêtement céramique comprenant une surface extérieure (52) avec une deuxième rugosité Rₘₐₓ qui est inférieure à la première rugosité Rₘₐₓ.

2. Procédé selon la revendication 1, dans lequel la couche (7) comprend un monomère (72) précurseur sol-gel du matériau céramique, le procédé comprenant en outre une étape (E20) de polymérisation du monomère (72) pour former ledit matériau céramique.

3. Procédé selon la revendication 1 ou la revendication 2, dans lequel le procédé comprend en outre une étape (E10) de dépôt d'une sous-couche sur la pièce, la couche (7) étant déposée sur ladite sous-couche.

4. Procédé selon la revendication 3, dans lequel la sous-couche comprend du MCrAlYRE, avec RE désignant Hf, et/ou Si, et/ou Ta, et/ou Re, et/ou Pt, et/ou Pd, et avec M désignant Ni et/ou Co, ou bien dans lequel la sous-couche comprend de l'aluminure modifié par du Pt, et/ou du Hf, et/ou du Si.

5. Procédé selon l'une quelconque des revendications 1 à 4, dans lequel le traitement thermique de la pièce pour consolider le revêtement céramique est réalisé en chauffant la pièce à une température supérieure à 700°C, et de préférence comprise entre 900°C et 1100°C.

6. Procédé selon l'une quelconque des revendications 1 à 5, dans lequel le matériau céramique comprend du Y₂O₃, de l'Al₂O₃, du TiO₂ du CeO₂, et/ou de la zircone stabilisée ou partiellement stabilisée du type ZrO₂-REO_{1.5} et/ou RE₂Zr₂O₇, avec RE désignant un ou plusieurs éléments Terre Rare, et/ou de la zircone yttriée.

7. Procédé selon l'une quelconque des revendications 1 à 6, dans lequel le revêtement céramique (5) a une épaisseur comprise entre 10 µm et 300 µm, et de préférence comprise entre 50 µm et 150 µm.

8. Procédé selon l'une quelconque des revendications précédentes, dans lequel la pièce est un distributeur d'air (1) de turbine comprenant pluralité d'aubages (4), le revêtement céramique (5) étant déposé sur les aubages (4).

## Patentansprüche

1. Verfahren zur Herstellung eines Turbomaschinenteils, das mit einer Wärmebarriere beschichtet ist, **dadurch gekennzeichnet, dass** es die folgenden Schritte umfasst:
- (E1) Herstellen des Teils durch additive Herstellung, wobei das Teil einen Abschnitt (6) umfasst, der eine äußere Oberfläche (61) mit einer ersten Rauigkeit Rₘₐₓ umfasst;
- (E2) Abscheiden einer Schicht (7), die Partikel (71) aus einem Keramikmaterial umfasst, durch Elektrophorese auf der äußeren Oberfläche (61);
- (E3) Verfestigen der Schicht (7) durch Wärmebehandlung, um eine Keramikbeschichtung (5) zu erhalten, wobei die Keramikbeschichtung eine äußere Oberfläche (52) mit einer zweiten Rauigkeit Rₘₐₓ umfasst, die niedriger als die erste Rauigkeit Rₘₐₓ ist.

2. Verfahren nach Anspruch 1, wobei die Schicht (7) ein Sol-Gel-Vorstufen-Monomer (72) des Keramikmaterials umfasst, wobei das Verfahren ferner einen Schritt (E20) des Polymerisierens des Monomers (72) zum Bilden des Keramikmaterials umfasst.

3. Verfahren nach Anspruch 1 oder Anspruch 2, wobei das Verfahren ferner einen Schritt (E10) des Abscheidens einer Unterschicht auf dem Teil umfasst, wobei die Schicht (7) auf der Unterschicht abgeschieden wird.

4. Verfahren nach Anspruch 3, wobei die Unterschicht MCrAlYRE umfasst, wobei RE Hf, und/oder Si, und/oder Ta, und/oder Re, und/oder Pt, und/oder Pd bezeichnet, und wobei M Ni und/oder Co bezeichnet, oder wobei die Unterschicht durch Pt, und/oder Hf, und/oder Si modifiziertes Aluminid umfasst.

5. Verfahren nach einem der Ansprüche 1 bis 4, wobei die Wärmebehandlung des Teils zum Verfestigen der Keramikbeschichtung durch Erhitzen des Teils auf eine Temperatur umfasst, die höher als 700°C ist und vorzugsweise zwischen 900°C und 1100°C beträgt.

6. Verfahren nach einem der Ansprüche 1 bis 5, wobei das Keramikmaterial Y₂O₃, Al₂O₃, TiO₂, CeO₂ und/oder stabilisiertes oder teilweise stabilisiertes Zirkon vom Typ ZrO₂-REO_{1,5} und/oder RE₂Zr₂O₇ umfasst, wobei RE ein oder mehrere Seltenerdelemente und/oder yttriertes Zirkon bezeichnet.

7. Verfahren nach einem der Ansprüche 1 bis 6, wobei die Keramikbeschichtung (5) eine Dicke von zwischen 10 µm und 300 µm und vorzugsweise von zwischen 50 µm und 150 µm aufweist.

8. Verfahren nach einem der vorhergehenden Ansprüche, wobei das Teil ein Turbinenluftverteiler (1) ist, der eine Vielzahl von Beschaufelungen (4) umfasst, wobei die Keramikbeschichtung (5) auf den Beschaufelungen (4) abgeschieden wird.

## Claims

1. A process for manufacturing a turbomachine part coated with a thermal barrier, **characterized in that** it comprises the following steps:
- (S1) manufacture of the part by additive manufacturing, said part comprising a portion (6) comprising an outer surface (61) with a first roughness Rₘₐₓ;
- (S2) electrophoretic deposition on said outer surface of a layer (7) comprising particles (71) of a ceramic material;
- (S3) consolidation of the layer (7) by heat treatment in order to obtain a ceramic coating (5), said ceramic coating (5) comprising an outer surface with a second roughness Rₘₐₓ which is less than the first roughness Rₘₐₓ.

2. The process as claimed in claim 1, wherein the layer (7) comprises a monomer (72) which is a sol-gel precursor of the ceramic material, the process further comprising a step (S20) of polymerization of the monomer (72) to form said ceramic material.

3. The process as claimed in claim 1 or claim 2, wherein the process further comprises a step (S10) of depositing a bond coat on the part, the layer (7) being deposited on said bond coat.

4. The process as claimed in claim 3, wherein the bond coat comprises MCrAlYRE, with RE denoting Hf, and/or Si, and/or Ta, and/or Re, and/or Pt, and/or Pd, and with M denoting Ni and/or Co, or wherein the bond coat comprises aluminide modified with Pt, and/or Hf, and/or Si.

5. The process as claimed in any one of claims 1 to 4, wherein the heat treatment of the part to consolidate the ceramic coating is carried out by heating the part to a temperature above 700°C, preferably between 900°C and 1100°C.

6. The process as claimed in any one of claims 1 to 5, wherein the ceramic material comprises Y₂O₃, Al₂O₃, TiO₂, CeO₂, and/or stabilized or partially stabilized zirconia of the type ZrO₂-REO_{1.5} and/or RE₂Zr₂O₇, with RE denoting one or more rare earth elements, and/or yttriated zirconia.

7. The process as claimed in any one of claims 1 to 6, wherein the ceramic coating (5) has a thickness between 10 µm and 300 µm, preferably between 50 µm and 150 µm.

8. The process as claimed in any one of the preceding claims, wherein the part is a turbine air distributor (1) comprising a plurality of blades (4), the ceramic coating (5) being deposited on the blades (4).
